# EUROPEAN PATENT APPLICATION

(11) **EP 3 915 706 A1**
(43) Date of publication of application: **01.12.2021**
(21) Application number: 20763673.9
(22) Date of filing: 25.02.2020
(51) Int. Cl.: B23K 1/19, B23K 1/005, B23K 1/20, B23K 9/23, B23K 9/235, B23K 26/21, B23K 26/323, B62D 25/06

(54) **METHOD FOR MANUFACTURING HETEROMETALLIC ASSEMBLY AND HETEROMETALLIC ASSEMBLY**

(30) Priority: 25.02.2019 JP 2019031694
(71) Applicant: KABUSHIKI KAISHA KOBE SEIKO SHO (KOBE STEEL, LTD.), Hyogo 651-8585 (JP)
(72) Inventor: SUZUKI, Reiichi, Fujisawa-shi Kanagawa 251-8551 (JP); MAEDA, Kyohei, Fujisawa-shi Kanagawa 251-8551 (JP)
(74) Representative: Müller-Boré & Partner Patentanwälte PartG mbB
(86) International application number: PCT/JP2020/007538
(87) International publication number: WO 2020/175494

(57) **Abstract**

Provided is a heterometallic assembly and a method for manufacturing a heterometallic assembly. In the method, metal members of different species, namely an aluminum or aluminum alloy member and a steel member, are joined in an industrially simple manner, and the method makes it possible to achieve a high joint strength and to produce a heterometallic assembly that has an excellent appearance. This method includes: a step in which a metal powder that can bond with a steel member (30) is sprayed at a low temperature and at a high speed onto at least a portion of a surface (20c) of an aluminum or aluminum alloy member (20) to form a coating film (41); a step in which the aluminum or aluminum alloy member (20) and the steel member (30) are positioned such that the coating film (41) and the steel member (30) face each other; and a step in which brazing using a brazing material (42) or welding using a weld material (40) are carried out between the coating film (41) and the steel member (30).

## Description

### TECHNICAL FIELD

The present invention relates to a method for manufacturing a dissimilar metal joint product and a dissimilar metal joint product, and particularly relates to a method for manufacturing a dissimilar metal joint product and a dissimilar metal joint product for main use in a structural member such as a roof, a door or a fender of an automobile.

### BACKGROUND ART

Two kinds of structures, that is, a mohican structure and a mohican-less structure are used for joining roof members, that is, a roof panel and a roof side rail to each other in a vehicle body of an automobile. The mohican structure has a structurally wide gap (clearance) to which a conventional mechanical joining method can be applied. The mohican-less structure has a narrow gap and an excellent appearance. A spot joining method is generally used for the mohican structure. The mohican structure based on the spot joining method has a sectionally concave joint portion. A step of covering a spot welding mark with a roof molding member is typically used for the joint portion in order to improve the appearance thereof.

On the other hand, the mohican-less structure has a narrow gap, with which the roof member is continuously joined to its peripheral members. Accordingly, the roof molding member can be dispensed with. Joining based on laser brazing or MIG (Metal Inert Gas) brazing with a comparatively small heat input is under consideration. However, joining based on brazing is limited to joining between members of one and the same material due to an industrial technical problem.

In addition, recently, in order to reduce the weight of a vehicle body for the sake of CO₂ emission reduction or to enhance safety against collision, it is under consideration to apply HTSS (High Tensile Strength Steel) to a body frame or the like in an automobile while applying a light-weight aluminum or aluminum-alloy material to a roof panel. When the roof side rail of the steel material is welded directly to the roof panel of the aluminum or aluminum-alloy material by typical arc welding, brittle intermetallic compounds are formed in the joining interface so that good strength cannot be obtained. A joining technique capable of obtaining high joining strength is therefore requested in dissimilar metal joining between the aluminum or aluminum-alloy material and the steel material.

Here Patent Literature 1 discloses a joining structure between dissimilar metal panels as a joining method between a flange portion of a roof panel made of aluminum and a flange portion of a body side panel made of steel. In the disclosed joining structure, a bonding agent is applied to the vicinities of an edge of one of the flange portions continuously in a circular closed-loop locus to form a bonding agent layer in advance, then the dissimilar metal panels are joined to each other by a self-piercing rivet (SPR).

### CITATION LIST

### PATENT LITERATURE

Patent Literature 1: JP-A-2007-321880

### SUMMARY OF INVENTION

### TECHNICAL PROBLEM

The joining structure disclosed in Patent Literature 1 is a joining technique in a mohican structure using a self-piercing rivet. The joining technique requires a roof molding member which covers a gap. Therefore, the joining technique cannot be regarded as an industrially simple method. In addition, there is room for improvement in terms of appearance.

The present invention has been developed in consideration of the aforementioned problem. An object of the invention is to provide a method for manufacturing a dissimilar metal joint product and a dissimilar metal joint product capable of joining different kinds of metals, that is, an aluminum or aluminum-alloy material and a steel material to each other with excellent appearance and high joining strength by an industrially simple method.

### SOLUTION TO PROBLEM

Accordingly, the aforementioned object of the present invention is attained by the following configuration (1) relating to a method for manufacturing a dissimilar metal joint product.
(1) A method for manufacturing a dissimilar metal joint product including:
   a step of spraying a metal powder capable of being joined to a steel material to at least a part of a surface of an aluminum or aluminum-alloy material at a low temperature and at a high speed to form a coating thereon;
   a step of disposing the aluminum or aluminum-alloy material and the steel material such that the coating and the steel material face each other; and
   a step of performing brazing using a brazing material or welding using a welding material between the coating and the steel material.

In addition, preferred embodiments of the present invention relating to the method for manufacturing a dissimilar metal joint product relate to the following configurations (2) to (8).
(2) The method for manufacturing a dissimilar metal joint product according to the configuration (1), wherein a laser brazing is used as the brazing using the brazing material.
(3) The method for manufacturing a dissimilar metal joint product according to the configuration (1) or (2), wherein the brazing material is either copper or a copper alloy.
(4) The method for manufacturing a dissimilar metal joint product according to the configuration (1), wherein a laser welding or an arc welding is used as the welding using the welding material.
(5) The method for manufacturing a dissimilar metal joint product according to the configuration (1) or (2), wherein the welding material is either a steel alloy or a nickel alloy.
(6) The method for manufacturing a dissimilar metal joint product according to any one of the configurations (1) through (5), wherein the metal powder contains at least one selected from ferritic stainless steel, austenitic stainless steel, ferritic and austenitic two-phase stainless steel, pure iron, carbon steel, nickel, a nickel alloy, cobalt, and a cobalt alloy.
(7) The method for manufacturing a dissimilar metal joint product according to any one of the configurations (1) through (6), wherein the aluminum or aluminum-alloy material and the steel material are used as a roof panel and a roof side rail in a vehicle body respectively.
(8) The method for manufacturing a dissimilar metal joint product according to any one of the configurations (1) through (7), wherein the coating has a thickness of 0.3 mm or more.

In addition, the aforementioned object of the present invention is attained by the following configuration relating to a dissimilar metal joint product.
(9) A dissimilar metal joint product including:
a coating that is formed on at least a part of a surface of an aluminum or aluminum-alloy material and made of a metal powder capable of being joined to a steel material, the aluminum or aluminum-alloy material and the steel material being disposed such that the coating and the steel material face each other; and
a joint portion that is formed between the coating and the steel material by brazing using a brazing material or welding using a welding material.

### ADVANTAGEOUS EFFECTS OF INVENTION

According to a method for manufacturing a dissimilar metal joint product of the present invention, it is possible to join different kinds of metals, that is, an aluminum or aluminum-alloy material and a steel material to each other with excellent appearance and high joining strength by an industrially simple method. In addition, according to a dissimilar metal joint product of the present invention, it is possible to obtain high joining strength.

### BRIEF DESCRIPTION OF DRAWINGS

[Fig. 1] Fig. 1 is a view for explaining an example of a vehicle body to which a dissimilar metal joint product according to an embodiment of the present invention is applied, the view showing a schematic structure on the side of a roof panel in the vehicle body.
[Fig. 2] Fig. 2 is a sectional view of line A-A in Fig. 1 for explaining an example of a method for manufacturing a dissimilar metal joint product according to an embodiment of the present invention.
[Fig. 3] Fig. 3 is a schematic sectional view of a dissimilar metal joint product joined by brazing using a brazing material according to a first embodiment.
[Fig. 4] Fig. 4 is a schematic sectional view of a dissimilar metal joint product joined by welding using a welding wire according to a second embodiment.

### DESCRIPTION OF EMBODIMENTS

Embodiments of a dissimilar metal joint product and a manufacturing method thereof according to the present invention will be described below in detail based on the drawings. The following embodiments will be described along joining between a roof panel of an aluminum or aluminum-alloy material and a roof side rail of a steel material in an automobile by way of example. However, the present invention can be also applied broadly to other applications than the joining between the roof panel and the roof side rail. The present invention is not limited to the following embodiments.

The present inventor et al. have made earnest studies about a method capable of manufacturing a different kind joint product which can obtain excellent appearance and high joining strength by an industrially simple method for joining different kinds of metals, that is, an aluminum or aluminum-alloy material and a steel material to each other. As a result, the present inventor et al. have found that a good dissimilar metal joint product can be obtained by spraying metal powder, which can be brazed or welded to the steel material, to at least a part of a surface of the aluminum or aluminum-alloy material at a low temperature and at a high speed to form a coating thereon, and joining the coating and the steel material by brazing or welding using a welding material.

Specifically, the following finding could be obtained. That is, powder of predetermined metal is sprayed to a surface of an aluminum or aluminum-alloy sheet or plate at a low temperature and at a high speed to form a coating of the metal. Due to high-strength mechanical coupling between the aluminum or aluminum-alloy sheet and the coating of the metal, a dissimilar metal joint product with high joining strength can be obtained by subsequent brazing or welding to the steel material.

### (First Embodiment)

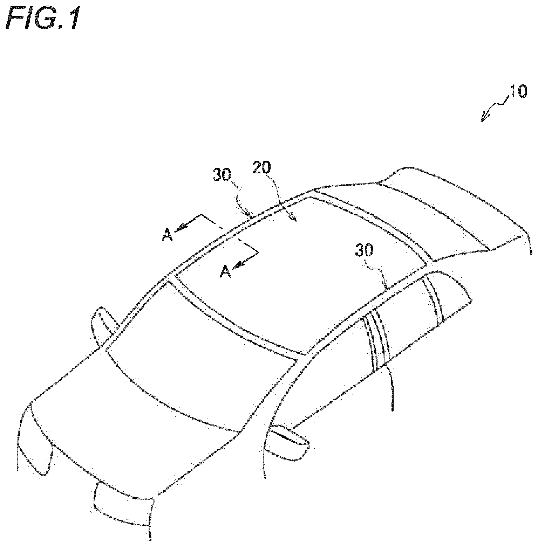

First, a first embodiment of the present invention will be described. Fig. 1 is a view showing a schematic structure of a vehicle body to which a dissimilar metal joint product is applied. As shown in Fig. 1, a vehicle body 10 of an automobile has a roof panel 20 of an aluminum or aluminum alloy material constituting a roof of the vehicle body 10, and roof side rails 30 of a steel material provided on both sides in the width direction of the vehicle body. The paired roof side rails 30 are provided on the left and right sides of the vehicle body 10 and in the front and rear direction of the vehicle body 10.

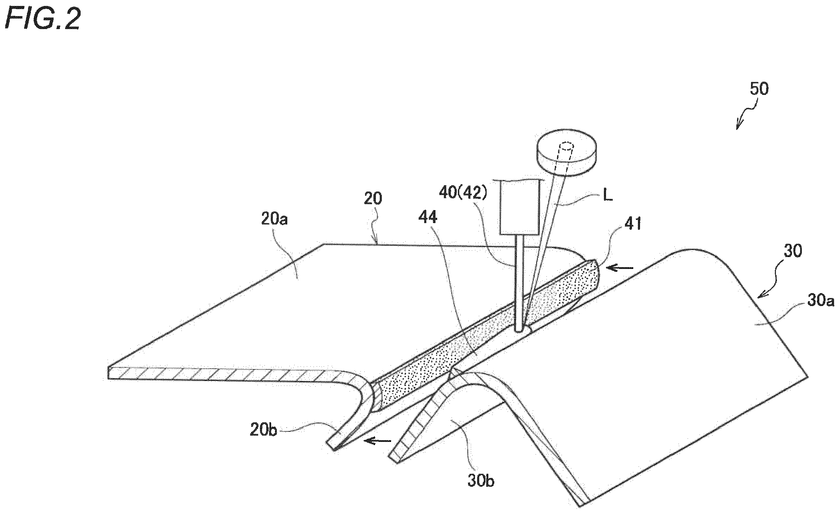

Next, refer to Fig. 2. The roof panel 20 has a body portion 20a which serves as a roof part of the vehicle body 10, and a bent portion 20b which is bent from an end part of the body portion 20a to the inside of the vehicle body. The bent portion 20b is formed to overlap with an inner flange portion 30b bent from an end part of the body portion 30a in the roof side rails 30 to the inside of the vehicle body. Thus, a joint having a mohican-less structure is formed by the roof panel 20 and the roof side rail 30. At a joining part of the joint, a joint portion 44 is formed by brazing. Thus, a dissimilar metal joint product 50 is manufactured.

Next, the method for manufacturing a dissimilar metal joint product will be described in detail. The method for manufacturing the dissimilar metal joint product 50 according to the present embodiment includes a step of spraying a metal powder to at least a part of a surface 20c of the aluminum or aluminum-alloy material (roof panel) 20 at a low temperature and at a high speed to form a coating 41 thereon, the metal powder containing at least one selected from ferritic stainless steel, austenitic stainless steel, ferritic and austenitic two-phase stainless steel, pure iron, carbon steel, nickel, a nickel alloy, cobalt, and a cobalt alloy, a step of overlapping the bent portion 20b of the aluminum or aluminum-alloy material 20 and the inner flange portion 30b of the steel material 30 such that the coating 41 and the steel material 30 face each other, and a step of performing brazing using a brazing material 42 serving as a welding material 40 between the coating 41 and the steel material 30.

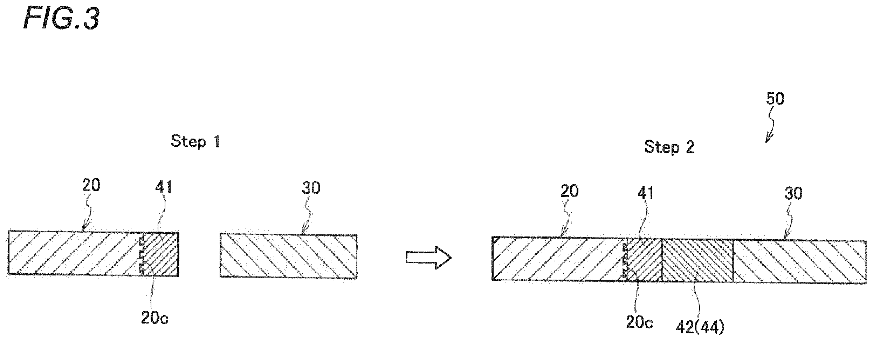

Fig. 3 is a sectional view schematically showing the dissimilar metal joint product which has been joined by brazing using the brazing material according to the embodiment of the present invention. As shown in Fig. 3, for the dissimilar metal joint product 50 according to the present embodiment, the metal powder is sprayed to at least a part of the surface 20c of the aluminum or aluminum-alloy material 20 at a low temperature and at a high speed to form the coating 41 thereon (Step 1). Next, the aluminum or aluminum-alloy material 20 and the steel material 30 are overlapped such that the coating 41 and the steel material 30 face each other. Further, the coating 41 and the steel material 30 are brazed by laser brazing (for example, laser and MIG brazing) in which the brazing material 42 is irradiated with a laser beam (Step 2).

The coating 41 includes at least one metal selected from ferritic stainless steel, austenitic stainless steel, ferritic and austenitic two-phase stainless steel, pure iron, carbon steel, nickel, a nickel alloy, cobalt, and a cobalt alloy. Fine irregularities are formed by plenty of the metal powder on the surface 20c of the aluminum or aluminum-alloy material 20 to which the metal powder has been sprayed at a low temperature and at a high speed (see Fig. 3). Accordingly, the coating 41 and the aluminum or aluminum-alloy material 20 are mechanically joined to each other firmly by an anchor effect.

A cold spraying method is preferred as a method for spraying the metal powder at a low temperature and at a high speed to thereby form the coating 41. The cold spraying method is a method in which gas and metal powder are sprayed to an object at a higher speed than the speed of sound to form the coating 41. In this method, the temperature of the working gas is comparatively low (for example, 900°C or lower, which is the melting point of iron particles or lower). Therefore, the relatively high melting-point metal powder of iron or the like and the aluminum or aluminum-alloy material are not melted with each other, but the relatively high melting-point metal powder of iron or the like eats into the aluminum or aluminum-alloy material due to its speed energy to establish a microscopically mechanically fastening state therebetween.

Accordingly, no intermetallic compound is produced, and no brittle phase can be formed. As a result, the firm coating (iron-based coating in the present embodiment) 41 is formed on a part of the aluminum or aluminum-alloy material 20. As will be described later, the cold spraying method may be carried out by suitable selection of gaseous species, pressure, temperature, particle size of the metal powder, etc.

Other spraying methods than the aforementioned cold spraying method, such as plasma spraying or arc spraying, may be considered as the method for forming the coating 41. However, according to those methods, the temperature of working gas is so high (for example, 2000°C or higher, which is the melting point of iron particles or higher) that the temperature of the particles and the temperature of the aluminum base metal exceed their melting points. Thus, both the particles and the aluminum base metal are melted so that intermetallic compounds are produced by chemical reaction, as a result, only a brittle coating can be formed.

In this manner, the metal powder including at least one selected from ferritic stainless steel, austenitic stainless steel, ferritic and austenitic two-phase stainless steel, pure iron, carbon steel, nickel, a nickel alloy, cobalt, and a cobalt alloy is sprayed to the surface 20c of the aluminum or aluminum-alloy material 20 at a low temperature and at a high speed to form the coating 41. After that, the steel material 30 is disposed on the obtained coating 41, and the coating 41 and the steel material 30 are brazed by laser brazing. Thus, the dissimilar metal joint product 50 having a structure where the aluminum or aluminum-alloy material 20, the coating (iron-based) 41, and the steel material 30 have been joined sequentially can be manufactured.

That is, the aluminum or aluminum-alloy material 20 and the coating 41 are mechanically fastened to each other, and the coating 41 and the steel material 30 are joined to each other by brazing. Thus, the aluminum or aluminum alloy material 20 and the steel material 30 are firmly joined to each other indirectly. When attention is paid only to the joint portion 44, dissimilar metal joints are not joined to each other, but the steel material 30 and the iron-based coating 41 belonging to the same kind of metal are joined to each other.

The brazing material 42 is preferably either copper or a copper alloy in terms of joining strength. A laser brazing method using a copper-alloy wire (which is called Everdur and standardized as YCuSiB in JIS Z3341 or ERCuSi-A in AWSA 5.7) as filler is a very general method for joining an iron sheet. The laser brazing method can be applied directly.

Here, the laser brazing is a joining method in which a wire-like brazing material that can be melted at a lower temperature than base metals is supplied between the base metals while the brazing material is melted by a laser. According to the laser brazing, the base metals are hardly melted. Thus, no brittle intermetallic compound is formed in the joining interface. In addition, input heat is so low that thermal deformation can be suppressed to the minimum. The laser brazing can achieve joining in a mohican-less structure excellent in appearance performance. 100% Ar gas is generally used as shielding gas for the brazing.

Next, detailed description will be made about the coating 41, the metal powder serving as the material thereof, the aluminum or aluminum-alloy material 20, and the steel material 30 in the manufacturing method according to the present embodiment.

### <Metal Species of Metal Powder: at least one selected from ferritic stainless steel, austenitic stainless steel, ferritic and austenitic two-phase stainless steel, pure iron, carbon steel, nickel, nickel alloy, cobalt, and cobalt alloy>

In order to join the coating 41 and the steel material 30 by laser welding, it is important to select a metal material as the material of the coating 41. That is, a metal material which can be welded with the steel material 30 with desired joining strength and which can improve the characteristic of a welding metal 43 is selected.

In the present embodiment, it is possible to select a stainless steel (SUS) capable of welding a good joining joint with the steel material 30 easily.

Particularly, of various stainless steels, ferritic stainless steel, austenitic stainless steel, and ferritic and austenitic two-phase stainless steel are more excellent in corrosion resistance than martensitic stainless steel, and therefore suitable as a material of an automobile to be exposed to a corrosive environment. Thus, powder composed of at least one metal selected from ferritic stainless steel, austenitic stainless steel, and ferritic and austenitic two-phase stainless steel is used as the metal powder to be used for the cold spraying.

On the other hand, when a stainless steel (SUS) added with plenty of quenching elements such as Cr or Ni is, for example, used as the metal powder, there is a fear as follows. That is, if the steel material 30 is a high tensile strength steel or a hot stamp material, all or a part of the welding metal 43 diluted by base metals may be martensitically transformed to increase the hardness to be too high. Thus, the joining strength (joint strength) may deteriorate, or cracking may occur. In such a case, powder containing at least one metal selected from pure iron, carbon steel, nickel, a nickel alloy, cobalt, and a cobalt alloy is used as the metal powder to be used for the cold spraying.

The pure iron in the present description designates iron which is easily available as industrial one and whose purity is 99.9 mass% or higher. On the other hand, the carbon steel designates a steel material which has iron and carbon as its main components and slightly contains silicon, manganese and impurities such as phosphor, sulfur and copper. An alloy called an Inconel alloy, an Incoloy alloy or a Hastelloy alloy, which has Ni as its main component and contains moderate amounts of additives such as Mo, Fe, Co, Cr and Mn, can be used as the nickel alloy.

### <Particle Size and Shape of Metal Powder>

The particle size of the metal powder serving as the material of the coating 41 is not particularly limited. However, in a low-pressure condition where the pressure of the gas for the cold spraying is set at 1 MPa or less, the particle size is, for example, preferably 20 µm or less, and more preferably 10 µm or less.

On the other hand, in a high-pressure condition where the pressure of the gas is 1 MPa to 5 MPa, the particle size is, for example, preferably 50 µm or less, and more preferably 30 µm or less.

The particle shape of the metal powder is not particularly limited. However, the shape is preferably spherical in terms of flowability.

### <Species of Working Gas>

The gas to be used for the cold spraying is not particularly limited. Generally, the cold spraying is performed using the air, nitrogen, helium, or mixed gas of them. On the other hand, oxidation of the coating 41 may adversely affect weldability. It is therefore preferable to use nitrogen or helium as the species of the gas.

### <Temperature of Working Gas>

As described above, when the temperature of the gas used for the cold spraying is high, the metal powder is melted so that intermetallic compounds may be produced due to chemical reaction with the aluminum or aluminum-alloy material 20 serving as the base material of the coating 41. It is therefore preferable to make the temperature of the working gas lower than the melting point of the metal powder to be used for the cold spraying. In order to obtain the dissimilar metal joint product according to the present embodiment, the temperature of the working gas is, for example, preferably set at room temperature (20°C) to 500°C.

### <Thickness of Coating>

When the coating 41 formed by the cold spraying is thinner than 0.3 mm, it may be difficult to melt only the coating 41 and the steel material 30 due to the influence of a variation in a laser beam L even if the welding conditions are suitably selected to melt only the coating 41 and the steel material 30, and therefore robustness deteriorates.

Therefore, when the thickness of the coating 41 is set at 0.3 mm or more, it is possible to flexibly deal with the variation in the laser beam L so that the conditions do not have to be set severely. Thus, the thickness of the coating 41 is preferably 0.3 mm or more, and more preferably 0.6 mm or more.

On the other hand, when the thickness of the coating 41 exceeds 3 mm, a period for film formation becomes long and the manufacturing cost may increase. Therefore, the thickness of the coating 41 is preferably 3 mm or less, and more preferably 2 mm or less.

### <Aluminum or Aluminum-Alloy Material>

The aluminum or aluminum-alloy material 20 is not particularly limited. However, when applied to a member for use in an automobile or the like, an aluminum-alloy material such as 2000 series, 5000 series, 6000 series or 7000 series is preferably used in terms of strength. In the present embodiment, an extruded material, a cast material or a forged material which is often used in the field of automobiles and the like can be used without problems as well as a sheet material.

### <Steel Material>

The steel material 30 is not particularly limited as long as it is a member consisting of metal generally called steel. Recently, high tensile strength steel materials and the like are often used as steel sheets for use in body frames of automobiles and the like in order to reduce the weight of vehicle bodies or enhance the safety against collision. Mechanical joining methods popular as dissimilar metal joining methods between steel and aluminum cannot be easily applied to a steel sheet whose tensile strength is 980 MPa or more. The present invention is effective particularly in a high tensile strength steel sheet whose tensile strength is 980 MPa or more.

### (Second Embodiment)

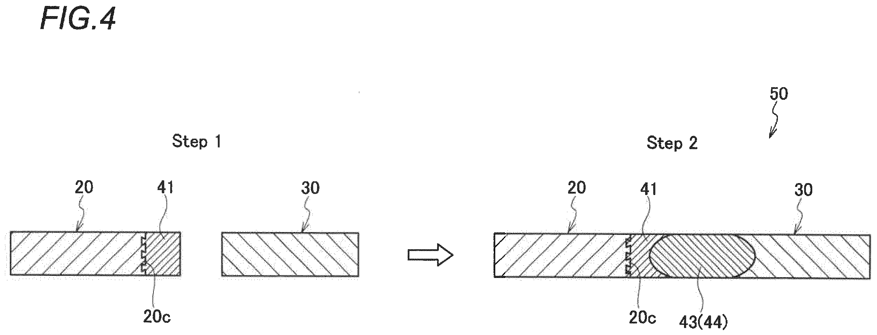

Next, a second embodiment of the present invention will be described. Other than the laser brazing which has been described in the first embodiment, laser welding can be used as the joining method between the steel material 30 and the coating 41. Fig. 4 is a schematic sectional view of a dissimilar metal joint product 50 joined by laser welding using a welding material (welding wire).

As shown in Fig. 4, also in the present embodiment, the metal powder is sprayed to at least a part of the surface 20c of the aluminum or aluminum-alloy material 20 at a low temperature and at a high speed to form the coating 41 thereon (Step 1). Next, the aluminum or aluminum-alloy material 20 and the steel material 30 are overlapped such that the coating 41 and the steel material 30 face each other. By laser welding, the coating 41 and the steel material 30 are melted to join the aluminum or aluminum-alloy material 20 and the steel material 20 to each other to thereby manufacture the dissimilar metal joint product 50 (Step 2).

In the joining by the laser welding, laser irradiation is carried out along the plane where the aluminum or aluminum-alloy material 20 and the steel material 30 have been overlapped, to melt a not-shown welding material (welding wire) made of an iron alloy, a surface layer of the steel material 30 and a surface layer of the coating 41 to thereby form the welding metal 43 in which all the materials have been mixed. However, it is necessary to pay attention to welding conditions for preventing the materials from being melted excessively to melt the aluminum or aluminum material 20. In this manner, even when the steel material 30 and the coating 41 belonging to the same kind of metal are melted and mixed, no intermetallic compound is produced. Therefore, there arises no problem in joining strength. Mixed gas containing 50 to 99% of Ar and the remainder being CO₂ is used as shielding gas.

Here, the laser welding is a welding method which is lower in input heat and smaller in thermal effect than other welding methods such as arc welding. When normal arc welding is used, heat generated during welding easily reaches the aluminum or aluminum-alloy material 20 so that the aluminum or aluminum-alloy material 20 may be melted to lower the joining strength. However, when the laser welding is used, thermal effect on the aluminum or aluminum-alloy material 20 can be suppressed to the minimum so that the aluminum or aluminum-alloy material 20 can be inhibited from being melted. Thus, reduction in joining strength can be prevented so that the good dissimilar metal joint product 50 can be obtained.

In order to further minimize the thermal effect on the aluminum or aluminum-alloy material 20, it is preferable to select suitable welding conditions to melt only the coating 41 and the steel material 30. A heat source, an output, a welding speed, a diameter of a welding portion, a distance between the coating 41 and the steel material 30, etc. can be suitably selected as the laser welding conditions.

A steel alloy or a nickel alloy is used as the welding material to be used for the laser welding. Examples of the steel alloy as the welding material include JIS Z3312 or AWS E7.18. The welding material of the steel alloy is lower in cost than a welding material of a copper alloy, and mixed gas of Ar and CO2 can be also used as the shielding gas. Thus, there is a merit that the cost is low. However, in comparison with brazing using a welding material of a copper alloy, a heat strain may appear easily to deteriorate the appearance. In addition, it is necessary to pay attention to the fear that the aluminum or aluminum-alloy material 20 may be melted to produce intermetallic compounds to thereby lower the strength.

Arc welding may be used as the joining method between the steel material 30 and the coating 41. Also in this case, it is necessary to pay attention to the welding conditions not to melt the aluminum or aluminum-alloy material 20.

The present invention is not limited to any of the aforementioned embodiments, but suitable modifications, improvements, etc. can be made thereon.

The following items are disclosed in the present description as described above.
(1) A method for manufacturing a dissimilar metal joint product including the steps of:
   a step of spraying a metal powder capable of being joined to a steel material to at least a part of a surface of an aluminum or aluminum-alloy material at a low temperature and at a high speed to form a coating thereon;
   a step of disposing the aluminum or aluminum-alloy material and the steel material such that the coating and the steel material face each other; and
   a step of performing brazing using a brazing material or welding using a welding material between the coating and the steel material.

   According to this configuration, it is possible to join the different kinds of metals, that is, the aluminum or aluminum-alloy material and the steel material to each other with excellent appearance and high joining strength by an industrially simple method.
(2) The method for manufacturing a dissimilar metal joint product according to the configuration (1), wherein a laser brazing is used as the brazing using the brazing material.
   According to this configuration, heat input is so low that the base metals are hardly melted. Therefore, no brittle intermetallic compound is formed in the joining interface. In addition, thermal deformation can be suppressed to the minimum.
(3) The method for manufacturing a dissimilar metal joint product according to the configuration (1) or (2), wherein the brazing material is either copper or a copper alloy.
   According to this configuration, the joining strength in the dissimilar metal joint product is improved.
(4) The method for manufacturing a dissimilar metal joint product according to the configuration (1), wherein a laser welding or an arc welding is used as the welding using the welding material.
   According to this configuration, heat input can be suppressed to be low enough to reduce thermal effect. Thus, the different kinds of metals can be joined.
(5) The method for manufacturing a dissimilar metal joint product according to the configuration (1) or (2), wherein the welding material is either a steel alloy or a nickel alloy.
   According to this configuration, the joining strength in the different kind metal joint product is improved.
(6) The method for manufacturing a dissimilar metal joint product according to any one of the configurations (1) through (5), wherein the metal powder contains at least one selected from ferritic stainless steel, austenitic stainless steel, ferritic and austenitic two-phase stainless steel, pure iron, carbon steel, nickel, a nickel alloy, cobalt, and a cobalt alloy.
   According to this configuration, the coating consisting of the iron-based metal powder can be formed on the surface of the aluminum or aluminum-alloy material so that the aluminum or aluminum-alloy material and the steel material can be joined to each other without producing brittle intermetallic compounds.
(7) The method for manufacturing a dissimilar metal joint product according to any one of the configurations (1) through (6), wherein the aluminum or aluminum-alloy material and the steel material are used as a roof panel and a roof side rail in a vehicle body respectively.
   According to this configuration, the roof panel of the aluminum or aluminum-alloy material and the roof side rail of the steel material can be firmly joined to each other.
(8) The method for manufacturing a dissimilar metal joint product according to any one of the configurations (1) through (7), wherein the coating has a thickness of 0.3 mm or more.
   According to this configuration, a variation in a laser beam can be flexibly dealt with, so that only the coating and the steel material can be melted. Thus, the dissimilar metal joint product having high joining strength can be formed without any intermetallic compound.
(9) A dissimilar metal joint product including:
   a coating that is formed on at least a part of a surface of an aluminum or aluminum-alloy material and made of a metal powder capable of being joined to a steel material, the aluminum or aluminum-alloy material and the steel material being disposed such that the coating and the steel material face each other; and
   a joint portion that is formed between the coating and the steel material by brazing using a brazing material or welding using a welding material.

According to this configuration, the dissimilar metal joint product has high joining strength.

Although various embodiments have been described above with reference to the drawings, it goes without saying that the present invention is not limited to such embodiments. It is obvious for those in the art to arrive at various changes or modifications within the scope stated in the claims. Not to say, it should be understood that those changes or modifications also belong to the technical scope of the present invention. In addition, any ones of constituent elements in the aforementioned embodiments may be combined without departing from the gist of the present invention.

The present application is based on a Japanese patent application (Japanese Patent Application No. 2019-031694) filed on February 25, 2019, the contents of which are incorporated herein by reference.

### REFERENCE SIGNS LIST

- 10: vehicle body
- 20: aluminum or aluminum-alloy material (roof panel)
- 20a: body portion
- 20b: bent portion
- 20c: surface
- 30: steel material (roof side rail)
- 30a: body portion
- 30b: inner flange portion
- 40: welding material
- 41: coating
- 42: brazing material (welding material)
- 43: welding metal
- 44: joint portion
- 50: dissimilar metal joint product
- L: laser beam

## Claims

1. A method for manufacturing a dissimilar metal joint product comprising:
a step of spraying a metal powder capable of being joined to a steel material to at least a part of a surface of an aluminum or aluminum-alloy material at a low temperature and at a high speed to form a coating thereon;
a step of disposing the aluminum or aluminum-alloy material and the steel material such that the coating and the steel material face each other; and
a step of performing brazing using a brazing material or welding using a welding material between the coating and the steel material.

2. The method for manufacturing a dissimilar metal joint product according to claim 1, wherein a laser brazing is used as the brazing using the brazing material.

3. The method for manufacturing a dissimilar metal joint product according to claim 1 or 2, wherein the brazing material is either copper or a copper alloy.

4. The method for manufacturing a dissimilar metal joint product according to claim 1, wherein a laser welding or an arc welding is used as the welding using the welding material.

5. The method for manufacturing a dissimilar metal joint product according to claim 1 or 2, wherein the welding material is either a steel alloy or a nickel alloy.

6. The method for manufacturing a dissimilar metal joint product according to claim 1 or 2, wherein the metal powder contains at least one selected from ferritic stainless steel, austenitic stainless steel, ferritic and austenitic two-phase stainless steel, pure iron, carbon steel, nickel, a nickel alloy, cobalt, and a cobalt alloy.

7. The method for manufacturing a dissimilar metal joint product according to claim 1 or 2, wherein the aluminum or aluminum-alloy material and the steel material are used as a roof panel and a roof side rail in a vehicle body respectively.

8. The method for manufacturing a dissimilar metal joint product according to claim 1 or 2, wherein the coating has a thickness of 0.3 mm or more.

9. A dissimilar metal joint product comprising:
a coating that is formed on at least a part of a surface of an aluminum or aluminum-alloy material and made of a metal powder capable of being joined to a steel material, the aluminum or aluminum-alloy material and the steel material being disposed such that the coating and the steel material face each other; and
a joint portion that is formed between the coating and the steel material by brazing using a brazing material or welding using a welding material.
